# EUROPEAN PATENT APPLICATION

(11) **EP 4 401 029 A1**
(43) Date of publication of application: **17.07.2024**
(21) Application number: 23220696.1
(22) Date of filing: 29.12.2023
(51) Int. Cl.: G06Q 50/02, H04W 4/029, G06T 11/20, G09B 29/10

(54) **POSITION INFORMATION DISPLAY METHOD, POSITION INFORMATION DISPLAY SYSTEM, AND POSITION INFORMATION DISPLAY PROGRAM**

(30) Priority: 10.01.2023 JP 2023001628; 17.10.2023 JP 2023178818
(71) Applicant: Yanmar Holdings Co., Ltd., Osaka-shi, Osaka (JP)
(72) Inventor: YOSHIMINE, Takumi, Osaka-shi (JP); MITANI, Hideki, Okayama-shi (JP)
(74) Representative: Dennemeyer & Associates S.A.

(57) **Abstract**

[Problem] According to an embodiment, position information of a plurality of work devices may be more efficiently displayed.

[Solution] A position information display method includes acquiring position information indicating positions of a plurality of work devices (2) (S01), generating range information indicating a first range in which the positions are distributed on a predetermined map (S02), calculating a scale for outputting display information including the first range, in map information representing the map, to a predetermined display region (62A) of a display device (61) (S03), and outputting the display information indicating the distribution of the positions in the first range based on the position information, the range information, and the scale (S05).

## Description

### TECHNICAL FIELD

The present disclosure relates to a position information display method, a position information display system, and a position information display program. For example, the present disclosure may be suitably used to display positions of a plurality of work devices that perform agricultural work.

### BACKGROUND ART

Patent Document 1 (Japanese Patent No. 6739385) discloses a technique of remotely acquiring individual positions of a plurality of work devices for performing agricultural work, plotting the positions on a map, and displaying the positions on a monitor.

When the plurality of work devices are distributed over a wide range, in order to display a list of all the work devices using this technique, the user is required to perform an operation of appropriately adjusting a range and/or a scale of the map to be displayed.

### PRIOR ART DOCUMENT

### PATENT DOCUMENT

Patent Document 1: Japanese Patent No. 6739385

### SUMMARY OF INVENTION

### TECHNICAL PROBLEM

In consideration of the above-described circumstances, an object of the present disclosure is to provide a position information display method, a position information display system, and a position information display program for more efficiently displaying position information of a plurality of work devices. The other objects and novel features of the present disclosure will become apparent from the description of this specification and the accompanying drawings.

### SOLUTION TO PROBLEM

A description will hereinafter be given of means for solving the problems with numbers and signs used in embodiments for carrying out the present disclosure. These numbers and signs are added in parentheses as a reference to show an example of corresponding relations between the description of the scope according to claims and the embodiments for carrying out the invention. Therefore, the scope according to claims should not be construed as being limited to the descriptions with the parentheses.

According to an aspect, a position information display method includes acquiring position information indicating positions of a plurality of work devices (2) (S01) and generating range information indicating a first range in which the positions are distributed on a predetermined map (S02). The position information display method further includes calculating a scale for outputting display information including the first range, in map information representing the map, to a predetermined display region (62A) of a display device (61) (S03). The position information display method further includes outputting the display information indicating the distribution of the positions in the first range based on the position information, the range information, and the scale (S05).

According to another aspect, a position information display system (1) includes an acquirer (511), a calculator (512), and an output section (513). The acquirer (511) acquires position information indicating positions of the plurality of work devices (2). The calculator (512) generates range information indicating a first range in which the positions are distributed on a predetermined map, and calculates a scale for outputting display information including a first range in map information indicating the map to the predetermined display region (62A) of the display device (61). The output section (513) outputs the display information indicating the distribution of the positions in the first range based on the position information, the range information, and the scale.

According to a further aspect, a position information display program is executed by a computing device (51) to realize a predetermined process. The process includes acquiring position information indicating positions of a plurality of work devices (2) (S01) and generating range information indicating a first range in which the positions are distributed on a predetermined map (S02). The process further includes calculating a scale for outputting display information including the first range, in map information representing the map, to a display region (62A) of a display device (61) (S03). The process further includes outputting the display information indicating the distribution of the positions in the first range based on the position information, the range information, and the scale (S05).

### ADVANTAGEOUS EFFECTS OF INVENTION

According to an embodiment, position information of a plurality of work devices may be more efficiently displayed.

### BRIEF DESCRIPTION OF DRAWINGS

FIG. 1 is a diagram illustrating an example of a configuration of a position information display system according to an embodiment.
FIG. 2 is a diagram illustrating an example of a configuration of a position information display device according to the embodiment.
FIG. 3 is a flowchart illustrating an example of a process in a position information display method according to the embodiment.
FIG. 4 is a diagram illustrating an example of display information displayed by a position information display method according to a related art.
FIG. 5 is a diagram illustrating an example of display information displayed by the position information display method according to the related art.
FIG. 6 is a diagram illustrating an example of display information when the display information of FIG. 5 is displayed at a different scale in the position information display method according to the related art.
FIG. 7 is a diagram illustrating an example of display information displayed by the position information display method according to the embodiment.
FIG. 8 is a diagram illustrating an example of display information when the display information of FIG. 7 is displayed at a different scale in the position information display method according to the embodiment.
FIG. 9 is a diagram illustrating an example of a configuration of an external terminal according to the embodiment.
FIG. 10 is a diagram illustrating an example of display information displayed by a position information display method according to an embodiment.
FIG. 11 is a diagram illustrating an example of display information when the display information of FIG. 10 is displayed at a different scale in the position information display method according to the embodiment.
FIG. 12 is a diagram illustrating an example of display information displayed by a position information display method according to an embodiment.
FIG. 13 is a diagram illustrating an example of display information when the display information of FIG. 12 is displayed at a different scale in the position information display method according to the embodiment.
FIG. 14 is a diagram illustrating an example of display information when the display information of FIG. 13 is displayed at a different scale in the position information display method according to the embodiment.
FIG. 15 is a diagram illustrating an example of display information displayed by a position information display method according to an embodiment.
FIG. 16 is a diagram illustrating an example of display information when the display information of FIG. 15 is displayed at a different scale in the position information display method according to the embodiment.
FIG. 17 is a diagram illustrating an example of display information when the display information of FIG. 16 is displayed at a different scale in the position information display method according to the embodiment.
FIG. 18 is a diagram illustrating an example of a configuration of a calculator according to an embodiment.
FIG. 19 is a flowchart illustrating an example of a process in the position information display method according to the embodiment.
FIG. 20 is a diagram illustrating an example of display information displayed by the position information display method according to the embodiment.
FIG. 21 is a diagram illustrating an example of display information displayed by the position information display method according to the embodiment.
FIG. 22 is a diagram illustrating an example of display information displayed by the position information display method according to the embodiment.
FIG. 23 is a diagram illustrating an example of display information displayed by the position information display method according to the embodiment.
FIG. 24 is a diagram illustrating an example of display information displayed by the position information display method according to the embodiment.
FIG. 25 is a diagram illustrating an example of display information displayed by the position information display method according to the embodiment.
FIG. 26 is a diagram illustrating an example of display information displayed by the position information display method according to the embodiment.

### DESCRIPTION OF EMBODIMENTS

A description will hereinafter be made on a mode for carrying out a position information display method, a position information display system, and a position information display program according to the present disclosure with reference to the accompanying drawings.

### First Embodiment

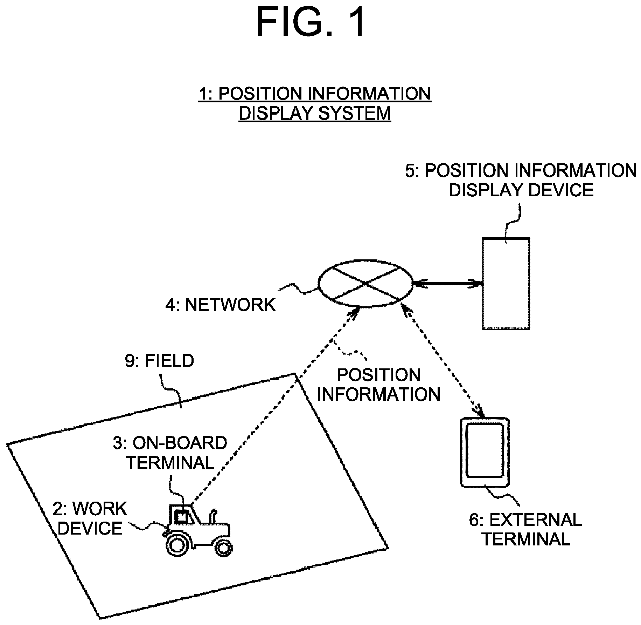

As illustrated in FIG. 1, a position information display system 1 according to an embodiment includes an on-board terminal 3 mounted on a work device 2 and a position information display device 5. The position information display system 1 may further include an external terminal 6. Examples of the external terminal 6 may include a smartphone and a tablet terminal.

Examples of the work device 2 include work vehicles, such as a tractor, a combine harvester, a vegetable harvester, a rice transplanter, a transplanter, a seeder, a sprayer, a conveying cart, and a truck that perform agricultural work while moving on the ground in a field 9. Examples of the work device 2 may further include a drone that performs agricultural work while flying above the field 9.

The on-board terminal 3, the position information display device 5, and the external terminal 6 transmit and receive various types of information by wireless communication and/or wired communication via a network 4. As an example, the on-board terminal 3 transmits, to the position information display device 5 via the network 4, position information obtained by measuring, with a global navigation satellite system (GNSS) or the like, positions of a plurality of points through which the work device 2 passes when the work device 2 works while moving in the field 9. The position information display device 5 records the received position information. The recorded position information may include some or all of a plurality of positions through which the work device 2 has passed when moving outside the field 9, a plurality of positions through which the work device 2 has passed when moving while performing work in the field 9, and a current position at which the work device 2 is currently present. The external terminal 6 receives and outputs, via the network 4, display information indicating the position information of the work device 2 recorded by the position information display device 5.

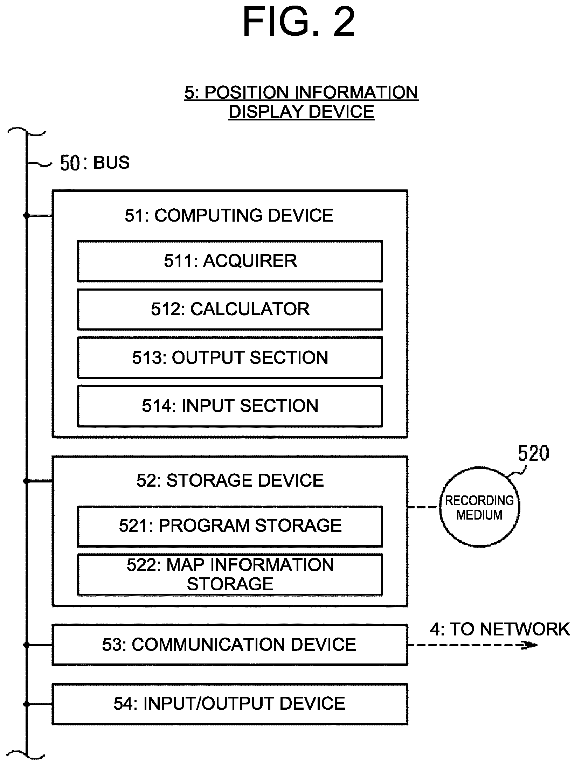

As illustrated in FIG. 2, the position information display device 5 according to the embodiment may have a configuration as a so-called computer. In the example of FIG. 2, the position information display device 5 includes a bus 50, a computing device 51, a storage device 52, a communication device 53, and an input/output device 54. The computing device 51, the storage device 52, the communication device 53, and the input/output device 54 are connected to each other in a mutually communicable manner via the bus 50.

The computing device 51 includes an acquirer 511, a calculator 512, an output section 513, and an input section 514. The storage device 52 includes a program storage 521 and a map information storage 522. The program storage 521 stores a position information display program.

The computing device 51 implements functions of the acquirer 511, the calculator 512, the output section 513, and the input section 514 by reading and executing the position information display program.

Each of the acquirer 511, the calculator 512, the output section 513, and the input section 514 is a virtual functional block that executes processing realized by the computing device 51 and the storage device 52 in cooperation with each other. The acquirer 511 acquires position information transmitted from the on-board terminal 3. The calculator 512 generates range information indicating a range where position information is distributed, and calculates a scale for displaying the range in map information on a display device. The output section 513 outputs display information indicating the distribution of the position information.

The input section 514 receives an operation by a user. More specific processes of these functional blocks will be described later.

The position information display program may be read from an external recording medium 520 and stored in the program storage 521. The recording medium 520 may be a nontransitory and tangible medium.

The communication device 53 communicates with an external device including the on-board terminal 3 and/or the external terminal 6 by wireless communication and/or wired communication via the network 4.

The input/output device 54 outputs information to the user and receives an operation input by the user. As an example, the input/output device 54 includes a display device that outputs an image and a keyboard and/or a mouse that receives an input.

As an example, the external terminal 6 may also include a computing device, a storage device, a communication device, and an input/output device. The input/output device may include a touch panel configured by integrating a display device that outputs an image and a touch pad that receives an input by a touch operation.

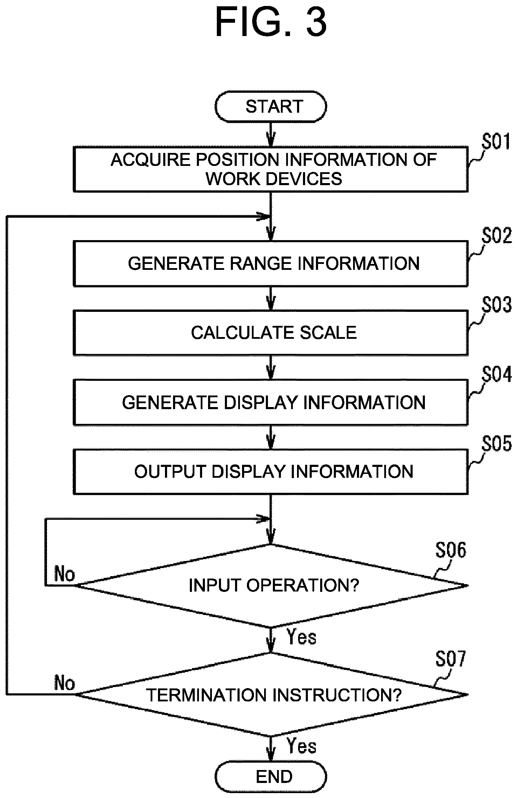

An example of a process of a position information display method according to the embodiment will be described with reference to a flowchart of FIG. 3. The process of the position information display method may be started when the position information display device 5 is activated. At this time, the process of the position information display method is realized by the computing device 51 of the position information display device 5 executing the position information display program.

When the flowchart in FIG. 3 is started, a process in step S01 is executed. In step S01, the acquirer 511 of FIG. 2 acquires position information transmitted from the on-board terminal 3. Here, the on-board terminal 3 may measure positions of a plurality of points through which the work device 2 has passed using a GNSS or the like, and transmit position information obtained in this way to the position information display device 5. Furthermore, the acquirer 511 may acquire, from a plurality of on-board terminals 3, position information of a plurality of work devices 2 on which the respective on-board terminals 3 are mounted. The acquirer 511 stores the acquired position information in the storage device 52. The points at which the positions of the work device 2 are measured are referred to as positioning points. The position information may include positioning information indicating the positions of the positioning points in association with positioning times at which the positions are measured. The positioning information may include a latitude and a longitude of a positioning point, and may further include an altitude of the positioning point.

After step S01 of FIG. 3, a process in step S02 is executed. In step S02, the calculator 512 of FIG. 2 generates range information indicating a range in which the positioning points of the plurality of work devices 2 are distributed. This range may be determined with reference to a map of a region where the plurality of work devices 2 are present. Map information representing the reference map may be stored in advance in the map information storage 522 of FIG. 2. The map information may be read from the recording medium 520 and stored in the map information storage 522, or may be received by the communication device 53 via the network 4 and stored in the map information storage 522.

After step S02 in FIG. 3, a process in step S03 is executed. In step S03, the calculator 512 in FIG. 2 calculates a scale for outputting display information including the range indicated by the range information generated in step S02 in the map information to a display region of a predetermined display device.

After step S03 in FIG. 3, a process in step S04 is executed. In step S04, the calculator 512 of FIG. 2 generates display information based on the position information acquired in step S01 of FIG. 3, the range information generated in step S02, and the scale calculated in step S03. More specifically, the calculator 512 may generate the display information by superimposing the map included in the range and icons representing the positions of the work devices 2. Here, the calculator 512 may arrange the icons at locations corresponding to the positions of the work devices 2 on the map.

After step S04 in FIG. 3, a process in step S05 is executed. In step S05, the output section 513 of FIG. 2 outputs the display information generated in step S04 of FIG. 3. More specifically, the output section 513 of FIG. 2 controls the communication device 53 to transmit the display information to the external terminal 6 of FIG. 1 via the network 4. The external terminal 6 displays the received display information on a display device or a touch panel that functions as a display device.

After step S05 in FIG. 3, a process in step S06 is executed. In step S06, the input section 514 in FIG. 2 determines whether an input operation has been performed by the user. As an example, the user operates the external terminal 6 of FIG. 1 to input an instruction for changing the display information displayed on the external terminal 6, an instruction for terminating the process of displaying the position information, or the like. When the user performs an input operation on the external terminal 6, the external terminal 6 transmits instruction information indicating content of the input operation performed by the user to the position information display device 5 via the network 4. When receiving the instruction information from the external terminal 6 via the network 4, the communication device 53 of the position information display device 5 transmits a detection signal indicating that the input operation performed by the user has been detected to the input section 514. Upon receiving the detection signal from the communication device 53, the input section 514 determines that the user has performed an input operation. On the other hand, when the input section 514 does not receive the detection signal from the communication device 53, it is determined that the input operation has not been performed by the user.

As a result of the determination in step S06 in FIG. 3, when an input operation has not been performed (No), the process in step S06 is performed again. In other words, the process in step S06 is repeated until the input operation performed by the user is detected.

As a result of the determination in step S06 in FIG. 3, when an input operation has been performed (Yes), the process proceeds to step S07. In step S07, it is determined whether the input section 514 of FIG. 2 is instructed to terminate the process of displaying the position information by the input operation detected in step S06 of FIG. 3.

As a result of the determination in step S07 in FIG. 3, when content of an input operation is different from the termination instruction (No), the process returns to step S02. In other words, the process in step S02 to step S07 is repeated until an input operation instructing the termination of the process is performed.

When the process in step S02 is executed again, the calculator 512 of FIG. 2 may newly generate range information different from the previous range information based on the input instruction. When the process in step S03 of FIG. 3 is executed again, the calculator 512 of FIG. 2 may newly calculate a scale different from the previous scale based on the range information newly generated and/or the input instruction. When the process in step S04 of FIG. 3 is executed again, the calculator 512 of FIG. 2 may generate display information different from the previous display information based on the range information newly generated, the scale newly calculated, and/or the input instruction. When the process in step S05 of FIG. 3 is executed again, the output section 513 of FIG. 2 may output display information different from the previous display information based on the range information newly generated, the scale newly calculated, the display information newly generated, and/or the input instruction.

As a result of the determination in step S07 of FIG. 3, when content of an input operation is the termination instruction (Yes), the process in the flowchart of FIG. 3 is terminated.

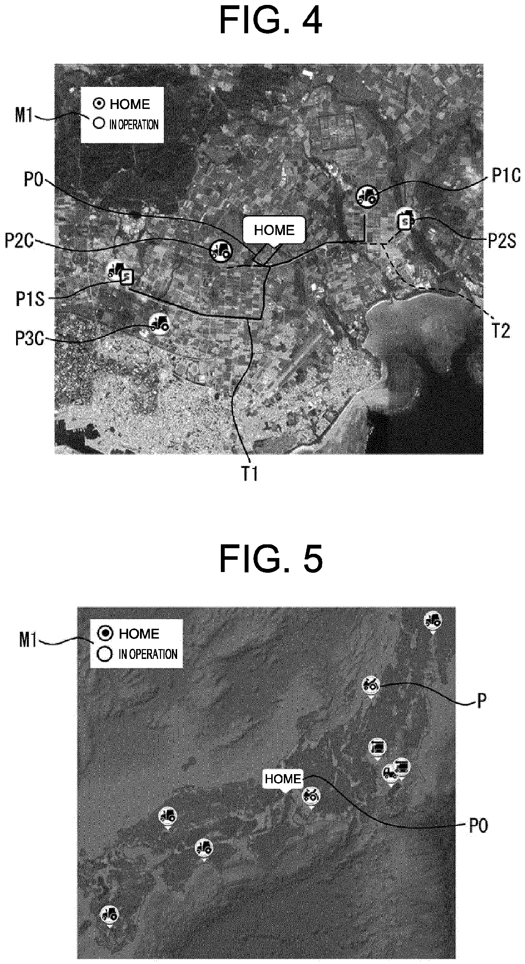

For better understanding of this embodiment, first, an example of display information displayed by the position information display method according to the related art will be described with reference to FIGS. 4, 5, and 6.

As illustrated in an example of FIG. 4, when current positions P1C, P2C, and P3C, initial positions P1S and P2S at a start of movement, movement routes T1 and T2, and the like of the plurality of work devices 2 to be monitored are all relatively close to a position P0 of a user indicated by "home", it is relatively easy for the user to recognize distribution of the work devices 2 displayed as a list on a map on the external terminal 6.

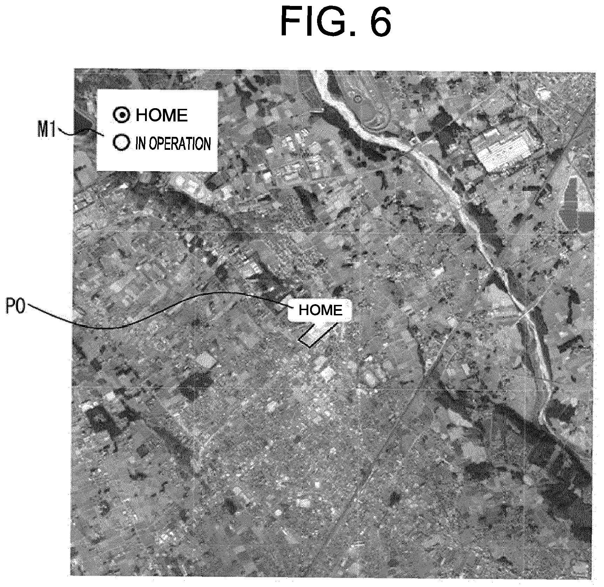

However, as illustrated in the example of FIG. 5, when the work devices 2 are distributed in a relatively wide range, a scale of the map is required to be adjusted in order to display a list of the distribution of positions of the work devices 2 on the map. In particular, in initial display which is first displayed after the user starts the operation of the external terminal 6, as illustrated in an example of FIG. 6, a situation may occur in which some of or all the plurality of work devices 2 to be monitored are not displayed on the map, depending on an initial value of the scale. In such a case, it may be difficult or troublesome for the user to operate the external terminal 6 to appropriately adjust a display range and/or a scale so as to display a list of all the work devices 2 to be monitored. As an example of a reason, when the user does not accurately recognize current positions of all the work devices 2, the user performs an operation of expanding a display range more than necessary in order to display all the work devices 2, and then performs an operation of narrowing the display range for easy viewing.

Therefore, in this embodiment, by appropriately calculating a value of the scale to be used for the initial display, the necessity for the user to perform an operation of adjusting the display range and/or the scale is eliminated, and the display of the position information of the work devices 2 is more efficiently performed.

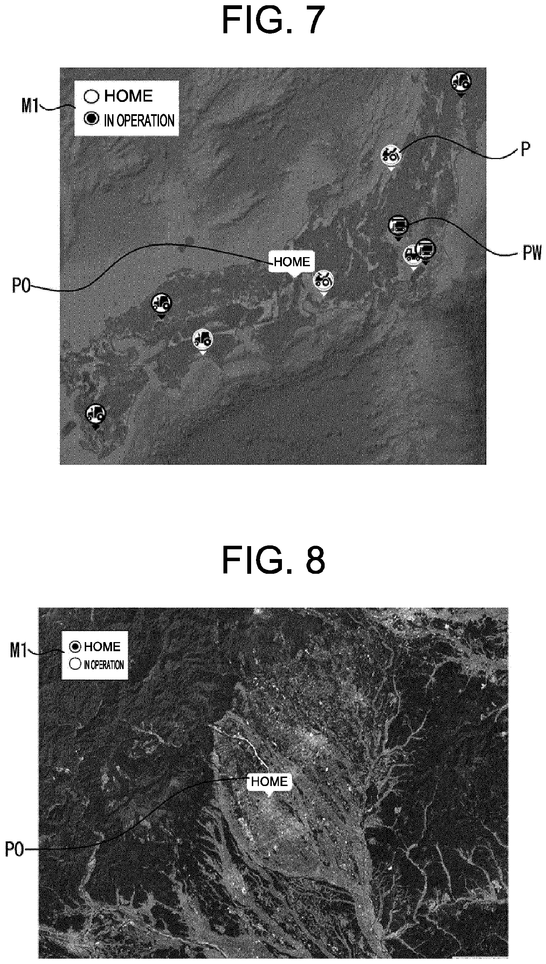

In this embodiment, the scale may be calculated in step S03 such that the display information output when the process in step S05 of FIG. 3 is executed for the first time includes all of the positions P and PW of the plurality of work devices 2 to be monitored, as illustrated in the example of FIG. 7. Alternatively, the scale may be calculated in step S03 so as to include all of the positions PW of the currently operating work devices 2 among the plurality of work devices 2 to be monitored. In this case, icons different from each other may be displayed so that operation states of the work devices 2 to be monitored can be distinguished, that is, the positions PW of the work devices 2 in operation and the positions P of the work devices 2 not in operation can be distinguished.

The operation states of the individual work devices 2 may be determined, for example, based on the position information. A vehicle speed of one of the work devices 2 of interest at a positioning point is obtained by dividing a distance between positions of two positioning points with consecutive positioning times in the position information of the work devices 2 of interest by a time interval between the positioning times. When a vehicle speed range during work of the work device 2 is different from a vehicle speed range when the work is not performed, it is determined whether the work device 2 is performing the work at the positioning point in accordance with one of the vehicle speed ranges including the obtained vehicle speed. A range in which the position information of the work devices 2 in the operation state is distributed may be extracted in accordance with the determination result, and range information indicating the extracted range may be generated.

Furthermore, in this embodiment, when the user operates a menu M1 illustrated in FIG. 7, display for easily recognizing the position P0 of "home" where the user is located may be entered as illustrated in the example of FIG. 8. In FIG. 8, an example of display when a scale for displaying the display information is switched to a value for easily recognizing the position P0 of "home" where the user is located is illustrated.

Alternatively, by reversing the order described above, home display as illustrated in FIG. 8 may be first performed as the display information to be output when the process in step S05 of FIG. 3 is executed for the first time, and thereafter, the user may operate the menu M1 illustrated in FIG. 8 to perform switch to the entire display as illustrated in FIG. 7. As a further modification, the home display may be performed first, and after a predetermined waiting time, smooth transition to the entire display may be performed by zoom-out processing without a user's operation on the menu M1. These options may be selected in advance by the user using a separate menu.

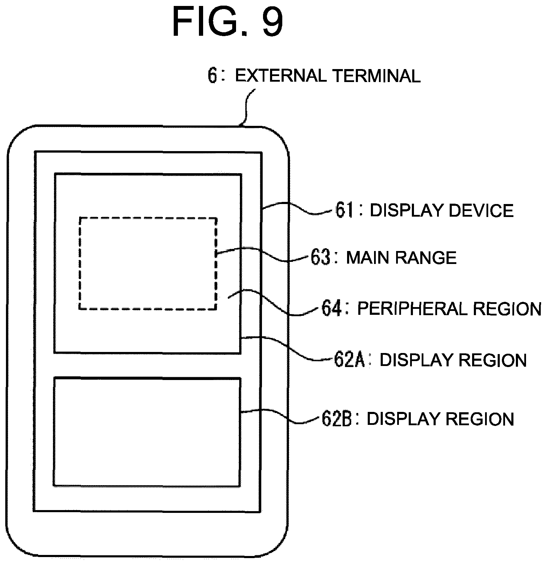

Referring to FIG. 9, a method for calculating a scale in step S03 of FIG. 3 will be described. In the example of FIG. 9, a portion of a display device 61 of the external terminal 6 is used as a first display region 62A, and another portion is used as a second display region 62B. For example, the display information may be output to the first display region 62A, and a menu screen to be operated by the user may be output to the second display region 62B. The menu screen may be output to the first display region 62A.

In the first display region 62A, a main range 63 is disposed at a center and a peripheral region 64 is disposed around the main range 63. The main range 63 is used to display a minimum region including the positions P and PW of all the work devices 2 to be displayed in the map. The peripheral region 64 is located so as to surround the main range 63, and is for allowing the user to easily recognize a position of an end portion of the main range 63 on the map by providing a distance larger than a predetermined threshold value between an outer periphery of the main range 63 and an outer periphery of the first display region 62A. A shape of an outer periphery of the peripheral region 64 is set to be similar to a shape of the first display region 62A. A scale for displaying the display information in the first display region 62A is calculated so that a region corresponding to a sum of areas of the main range 63 and the peripheral region 64 in the map corresponds to an area of the first display region 62A.

As described above, according to the position information display method, the position information display system 1, and the position information display program of this embodiment, the position information of the plurality of work devices 2 can be more efficiently displayed even when the user does not perform any operation or when the user performs only a simple operation.

### Second Embodiment

In the above-described first embodiment, when the range information is generated in step S02 of FIG. 3, the range information indicating the range in which the positions of the work devices 2 are distributed on the map is generated as a configuration example. In a second embodiment, a configuration example in which range information is generated based on operation data indicating a work history of work performed in a work region by a work device 2 will be described.

As an example, the operation data of the work device 2 includes information indicating a movement trajectory and/or a work trajectory obtained by connecting positioning points at which positions of the work device 2 is measured in the order of positioning times at which the positioning is performed. As another example, the operation data of the work device 2 includes information indicating at least one of a work area, a work ridge, and a work field as a work region in which the work device 2 has performed work.

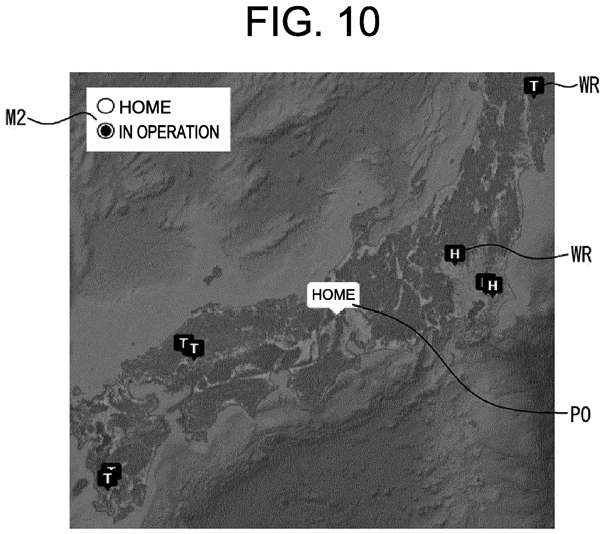

In this embodiment, a scale may be calculated in step S03 such that display information output when a process in step S05 of FIG. 3 is executed for the first time includes all work regions WR where a plurality of work devices 2 to be monitored have performed work, as illustrated in the example of FIG. 10.

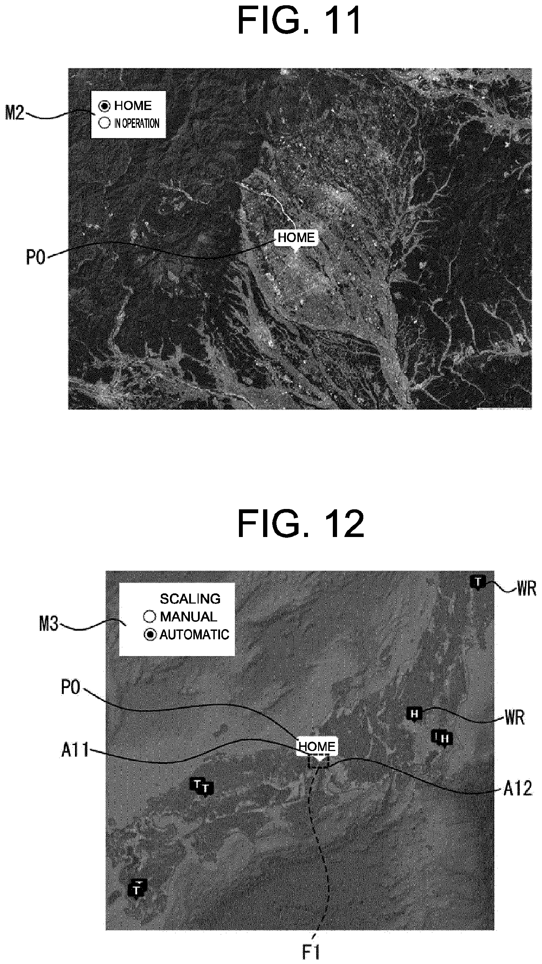

Furthermore, in this embodiment, when a user operates a menu M2 illustrated in FIG. 10, display for easily recognizing a position P0 of "home" where a user is located as illustrated in the example of FIG. 11 may be entered. In FIG. 11, an example of display when a scale for displaying display information is switched to a value for easily recognizing the position P0 of "home" where the user is located is illustrated.

Alternatively, by reversing the order described above, home display as illustrated in FIG. 11 may be first performed as the display information to be output when the process in step S05 of FIG. 3 is executed for the first time, and thereafter, the user may operate the menu M2 illustrated in FIG. 11 to perform switch to the entire display as illustrated in FIG. 10. As a further modification, the home display may be performed first, and after a predetermined waiting time, smooth transition to the entire display may be performed by zoom-out processing without a user's operation on the menu M2. These options may be selected in advance by the user using a separate menu.

As described above, according to a position information display method, a position information display system 1, and a position information display program of this embodiment, position information indicating work regions where a plurality of work devices 2 have performed work can be more efficiently displayed even when a user does not perform any operation or when the user performs only a simple operation.

### Third Embodiment

In a third embodiment, a configuration example in which, after display information is output when a process in step S05 of FIG. 3 is executed for the first time in each of the above-described embodiments, display information in a range designated by a user is output in accordance with an operation performed by the user will be described.

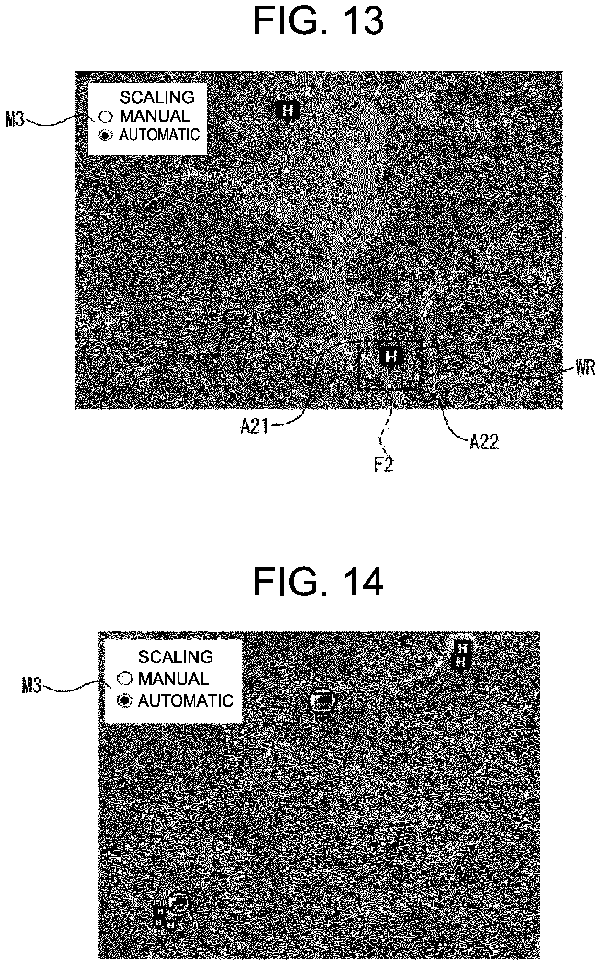

As an example, in a state in which display information illustrated in FIG. 12 is output to a display device 61 of FIG. 9, the user operates a menu M3 illustrated in FIG. 12 in step S06 of FIG. 3 to designate a first corner A11 and a second corner A12, thereby designating a rectangular frame F1 having a diagonal line connecting the corners A11 and A12. Thereafter, when the process in step S05 of FIG. 3 is executed next, an output section 513 of FIG. 2 performs switching of display information to be outputted from a display device 61 of FIG. 9 to display information illustrated in FIG. 13 and outputs the display information.

More specifically, an external terminal 6 of FIG. 1 transmits instruction information indicating the frame F1 to a position information display device 5 via a network 4. When receiving the instruction information from the external terminal 6 via the network 4, a communication device 53 of FIG. 2 transmits the received instruction information to an input section 514. The input section 514 detects information indicating the frame F1 in the instruction information. After the process in step S02 to step S04 in FIG. 3 is performed again, the output section 513 of FIG. 2 outputs display information including a range of the frame F1.

As an example, the display information illustrated in FIG. 13 is output as the display information including the range of the frame F 1.

Similarly, in a state in which the display information illustrated in FIG. 13 is output to the display device 61 of FIG. 9, the user operates the menu M3 illustrated in FIG. 13 in step S06 of FIG. 3 to designate a third corner A21 and a fourth corner A22, thereby designating a rectangular frame F2 having a diagonal line connecting the corners A21 and A22. Thereafter, when the process in step S05 of FIG. 3 is executed next, the output section 513 of FIG. 2 performs switching of display information to be outputted from the display device 61 of FIG. 9 to display information illustrated in FIG. 14 and outputs the display information.

Note that, when the user operates the menu M3 illustrated in FIGS. 12, 13, and 14, a setting of a range including a position of the work device 2 and/or a work region included in the frames F1 and F2 is switched between a manual setting or an automatic setting. In a case of the manual setting, the frames F1 and F2 designated by the user may be set as display ranges as they are. In a case of the automatic setting, a display range may be automatically set by adding a peripheral region having a predetermined width to a periphery of a range including the position of the work device 2 and/or the work region included in the frames F1 and F2 designated by the user.

As described above, according to a position information display method, a position information display system 1, and a position information display program of this embodiment, the position information indicating the work devices 2 and/or the work region can be more efficiently displayed when the user performs only a simple operation.

### Fourth Embodiment

In the above-described embodiments, the configuration example in which an appropriate scale for displaying a range including a plurality of work devices 2 or a plurality of work regions WR is calculated and display information is generated based on the calculated scale has been described. In a fourth embodiment, a configuration example will be described in which an appropriate scale for displaying a range including a movement trajectory along which one work device 2 of interest moves during work is calculated and display information is generated based on the calculated scale.

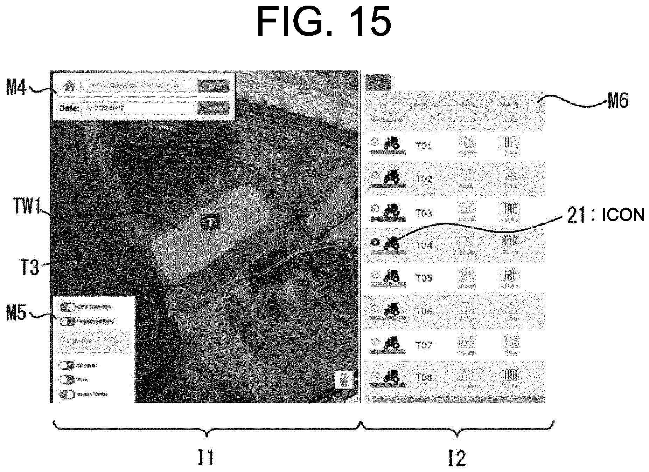

As illustrated in an example of FIG. 15, a user may operate an external terminal 6 illustrated in FIG. 9 to divisionally display a first image I1 and a second image I2 in a first display region 62A. In the example of FIG. 15, a plurality of icons 21 corresponding to respective work devices 2 are arranged in a menu M6 displayed in the second image I2. Here, when the user performs an operation of selecting a target one of the plurality of icons 21 of the work devices 2, a work route TW1 along which the work device 2 corresponding to the selected icon 21 has moved during work and a movement route T3 along which the work device 2 has moved other than during work are displayed in the first image I1. Menus M4 and M5 may be additionally displayed in the first image 11. In the example of FIG. 15, the user operates the menu M4 to set a date and time when the target work device 2 in the first image I1 has moved on the work route TW1 and/or the movement route T3. Furthermore, in the example of FIG. 15, the user operates the menu M5 to perform switching between display and non-display of the work route TW1 and/or the movement route T3, the field 9, the various work devices 2, and the like. As an example, these operations may be detected in step S06 of FIG. 3, and the display switching in response to this operation may be performed in step S05 executed again thereafter.

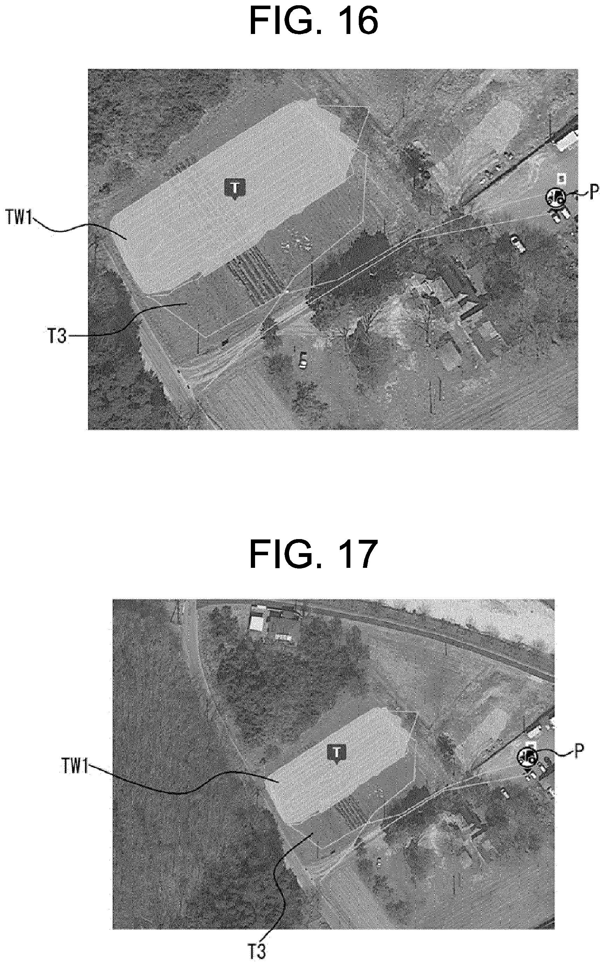

As an example of display after the switching, as illustrated in FIG. 16, display information including a range including at least a position P of the work device 2, the work route TW1, and the movement route T3 and a surrounding region arranged around the range and having a minimum width may be generated in step S04 of FIG. 3 and output in step S05.

As another example of the display after the switching, as illustrated in FIG. 17, display information including a range including at least the position P of the work device 2, the work route TW1, and the movement route T3 and a peripheral region formed around the range such that a center of the work route TW1 is arranged at a center of a display region may be generated in step S04 of FIG. 3 and may be output in step S05. Here, the center of the work route TW1 may be the center of gravity of a polygon calculated as a convex hull or a concave hull of the work route TW1.

As described above, according to the position information display methods, the position information display systems 1, and the position information display programs of the individual embodiments, the position information of the plurality of work devices 2 can be more efficiently displayed even when the user does not perform any operation or when the user performs only a simple operation.

### Modifications

In the foregoing embodiments, the configuration example in which it is determined whether the work device 2 is working at the positioning point of interest based on a vehicle speed of the work device 2 has been described. As a modification example of this configuration example, it may be determined whether the work device 2 is performing work based on information other than a vehicle speed or position information of the work device 2.

As an example, in a case where the work device 2 includes a work section drive sensor, it may be determined that the work device 2 is performing work when the work section drive sensor is in an ON state. A signal indicating a state of the work section drive sensor may be transmitted from an on-board terminal 3 of FIG. 1 to a position information display device 5 together with the position information. The signal indicating the state of the work section drive sensor indicates, for example, a state of a mowing/threshing clutch, a state of a planting clutch, the number of revolutions of a Power Take Off (PTO), a lifting state (lifting height and lift angle) of a work machine, an engine load factor, and the like. As another example of a sensor, when the work device 2 includes an acceleration sensor, a vibration sensor, other post-attached sensors, or the like, it may be determined whether the work device 2 is performing work based on a signal indicating a result detected by these sensors.

As another example, it may be determined that the work device 2 is working when the work device 2 is traveling in parallel with a specific vehicle. Examples of such a combination of vehicles include a combination of a harvester as the work device 2 and a truck or a tractor wagon traveling in parallel with the harvester.

In such a case, by comparing position information of the harvester as the work device 2 with position information of the vehicle traveling in parallel, it is determined whether the work device 2 and the specific vehicle have traveled in parallel.

As still another example, a state of the work device 2 may be detected using a device connected to a controller area network (CAN) or another device and a signal indicating the detected state may be transmitted from the on-board terminal 3 to the position information display device 5 together with the position information. In such a case, a period during which the work device 2 is working is determined based on a result of the detection of the state of the work device 2.

### Fifth Embodiment

In the above-described embodiments, the configuration in which the single display region 62A is set in the display device 61 and one piece of display information is output to the display region 62A has been described. In a fifth embodiment, as a modification of this configuration, a configuration example in which a plurality of partial display regions are set in a display device 61 and a plurality of pieces of display information are output to the plurality of partial display regions will be described.

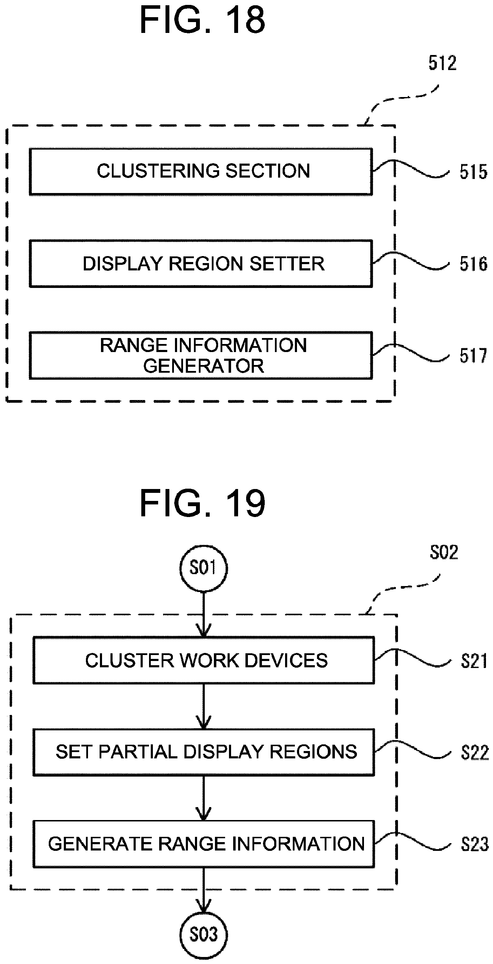

A position information display device 5 according to this embodiment is obtained by making the following changes to the position information display device 5 according to the first embodiment illustrated in FIG. 2. That is, as illustrated in FIG. 18, a calculator 512 includes a clustering section 515, a display region setter 516, and a range information generator 517. The clustering section 515, the display region setter 516, and the range information generator 517 are individually virtual functional blocks that execute processing realized by a computing device 51 and a storage device 52 in cooperation with each other. The clustering section 515 performs clustering to classify the plurality of work devices 2 into a plurality of clusters based on a predetermined condition. The display region setter 516 sets arrangement of the plurality of partial display regions corresponding to the plurality of clusters in the display device 61 based on a result of the clustering. The range information generator 517 generates a plurality of pieces of range information indicating ranges in which position information of the work devices 2 displayed in the plurality of partial display regions is distributed. The clustering section 515, the display region setter 516, and the range information generator 517 will be described later in detail.

The process of a position information display method according to this embodiment is obtained by making the following changes to the process of the position information display method according to the first embodiment illustrated in the flowchart of FIG. 3. That is, as illustrated in FIG. 19, step S02 in FIG. 3 includes step S21, step S22, and step S23. In step S21 of FIG. 19, the clustering section 515 of FIG. 18 clusters the work devices 2. In step S22 of FIG. 19, the display region setter 516 of FIG. 18 sets a plurality of partial display regions. In step S23 of FIG. 19, the range information generator 517 of FIG. 18 generates respective pieces of range information. Details of step S21, step S22, and step S23 in FIG. 19 will be described later.

The clustering of the work devices 2 performed in step S21 of FIG. 19 by the clustering section 515 of FIG. 18 will now be described. When a process in step S02 is executed after step S01 of FIG. 3, a process in step S21 of FIG. 19 is executed first. The clustering is a process of classifying a plurality of pieces of data into a plurality of clusters based on similarity degrees of the pieces of data. In this embodiment, a process of classifying a plurality of work devices 2 into a plurality of clusters based on positions thereof is referred to as the clustering of the work devices 2.

More specifically, the clustering of the work devices 2 is a process of classifying two work devices 2 located relatively close to each other into a same cluster and classifying two work devices 2 located relatively far from each other into different clusters. As an example, the total number of clusters to be classified may be determined in advance by a process called "k-means", and all the work devices 2 may be classified into any one of the clusters. As another example, by a process called "X-means" or a process called "DB-Scan", all the work devices 2 may be classified into any one of the clusters while automatically optimizing the total number of clusters of classification destinations. In any case, the clustering section 515 of FIG. 18 may appropriately determine a threshold value used as a criterion for classifying the clusters based on a distance between two work devices 2 during the execution of the clustering process in step S21 of FIG. 19. As an example, when a distance between two work devices 2 is shorter than the threshold value, the two work devices may be classified into a same cluster, and when the distance is equal to or larger than the threshold value, the two work devices may be classified into different clusters. As a result, the clustering section 515 of FIG. 18 can appropriately classify the plurality of work devices 2 into a plurality of clusters for each region or each area in which the work devices 2 are located. Note that, although a range of a partial display region including positions of the work devices 2 classified into a same cluster is obtained after the clustering, since the partial display region substantially includes work regions in which the respective work devices 2 included in the cluster performed the work, the clustering process in step S21 may be performed on the work regions of the work devices 2.

After step S21 in FIG. 19, a process in step S22 is executed. The setting of a plurality of partial display regions by the display region setter 516 of FIG. 18 in step S22 will be described.

The display region setter 516 sets a partial display region for each of the plurality of clusters obtained by the clustering of the plurality of work devices 2 in step S21 of FIG. 19. More specifically, arrangement, in the display device 61, of the partial display regions for displaying ranges in which the positions of the work devices 2 classified into the individual clusters are distributed on the map is set based on the position information of the work devices 2 classified into the individual clusters. As an example, when all the clusters are simultaneously displayed on the display device 61, the display region setter 516 may set the arrangement of the partial display regions of the same total number as the total number of the clusters on the display device 61. As another example, when only some of the plurality of clusters determined in step S21 of FIG. 19 are simultaneously displayed on the display device 61, the display region setter 516 may set arrangement of the partial display regions of the same total number as the total number of clusters to be displayed on the display device 61. In any case, the display region setter 516 may further set, as one of the plurality of partial display regions, arrangement, in the display device 61, of an entire display region for displaying all the work devices 2 as targets of the clustering process in step S21 of FIG. 19.

After step S22 in FIG. 19, a process in step S23 is executed. Generation of each range information by the range information generator 517 of FIG. 18 performed in step S23 will be described.

The range information generator 517 performs the same process as that in step S02 of FIG. 3 on each of the plurality of clusters determined in step S21 of FIG. 19 to generate a plurality of pieces of range information corresponding to the individual clusters. Note that the range information generator 517 of FIG. 18 may further generate range information corresponding to the entire display region whose arrangement in the display device 61 is determined in step S22 of FIG. 19.

After step S23 of FIG. 19, step S03, step S04, and step S05 in FIG. 3 are executed in the same manner as in the first to fourth embodiments. However, in step S03 of FIG. 3, the calculator 512 of FIG. 2 individually calculates scales for the plurality of partial display regions and the entire display region. Furthermore, in step S04 of FIG. 3, the calculator 512 of FIG. 2 individually generates display information for the plurality of partial display regions and the entire display region. Moreover, in step S05 of FIG. 3, the output section 513 of FIG. 2 individually outputs display information for the plurality of partial display regions and the entire display region.

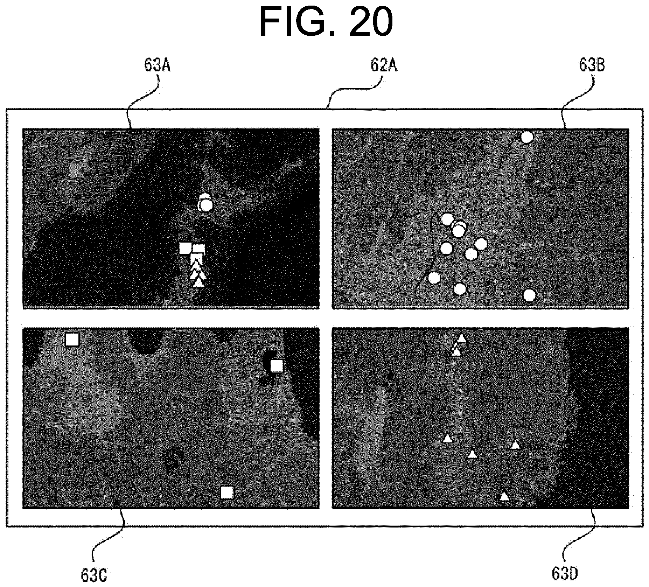

As an example, in step S05 of FIG. 3, the output section 513 of FIG. 2 may output the entire display region and the plurality of partial display regions as illustrated in FIG. 20. In the example of FIG. 20, inside the display region 62A, a plurality of partial display regions 63A, 63B, 63C, and 63D are arranged at an upper left, an upper right, a lower left, and a lower right, respectively. Here, in the partial display region 63B, distribution of positions of work devices 2 included in a first cluster is displayed on a map with circular icons. Similarly, in the partial display region 63C, distribution of positions of work devices 2 included in a second cluster is displayed on the map with square icons. Furthermore, in the partial display region 63D, distribution of positions of work devices 2 included in a third cluster is displayed on the map with equilateral triangle icons. Moreover, in the partial display region 63A, distribution of the positions of all the work devices 2 is displayed on the map with the same icons as those used for the display in the partial display regions 63B, 63C, and 63D. Note that scales of the partial display regions 63A, 63B, 63C, and 63D are set to respective optimum values and are not necessarily the same. In the example of FIG. 20, the icons having different shapes are used to distinguish the work devices 2 included in the different clusters, but this is merely an example, and this embodiment is not limited thereto. As another example, icons different in color, size, or the like may be used, or characters or numerals may be used.

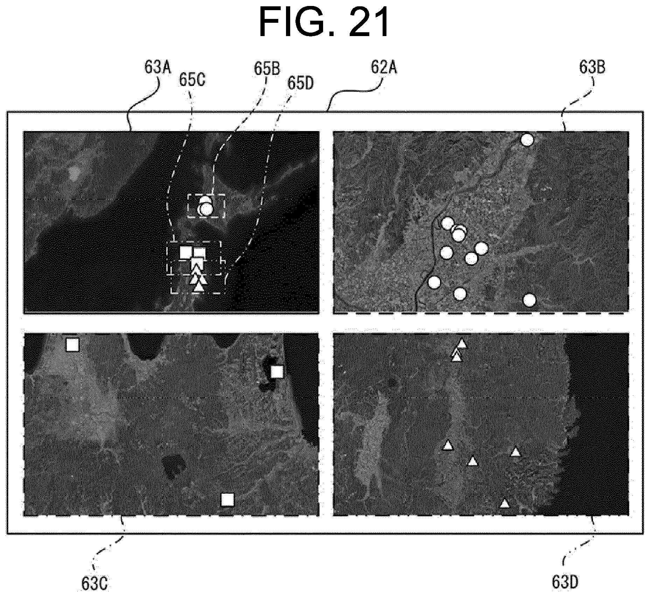

As a further example, in step S05 of FIG. 3, the output section 513 of FIG. 2 may output the entire display region and the plurality of partial display regions as illustrated in FIG. 21. An example of FIG. 21 is obtained by adding the following changes to the example of FIG. 20. Specifically, a broken line is used as a line type of a frame line of the partial display region 63B, and a frame 65B indicating a range displayed in the partial display region 63B is indicated by the same line type as the frame line of the partial display region 63B on the map of the partial display region 63A. Similarly, a dasheddotted line is used as a line type of a frame line of the partial display region 63C, and a frame 65C indicating a range displayed in the partial display region 63C is indicated by the same line type as the frame line of the partial display region 63C on the map of the partial display region 63A. Furthermore, a two dot chain line is used as a line type of a frame line of the partial display region 63D, and a frame 65D indicating a range displayed in the partial display region 63D is indicated by the same line type as the frame line of the partial display region 63D on the map of the partial display region 63A. Note that, in the example of FIG. 21, the frames 65B, 65C, and 65D having different line types are used to distinguish the different ranges, but this is merely an example, and this embodiment is not limited thereto. As another example, frames having different colors or different thicknesses may be used. Furthermore, in step S06 of FIG. 3, the user may change the ranges displayed in the partial display regions 65B, 65C, and 65D by operating the positions and/or the sizes of the frames 63B, 63C, and 63D via the input/output device 54 of FIG. 2.

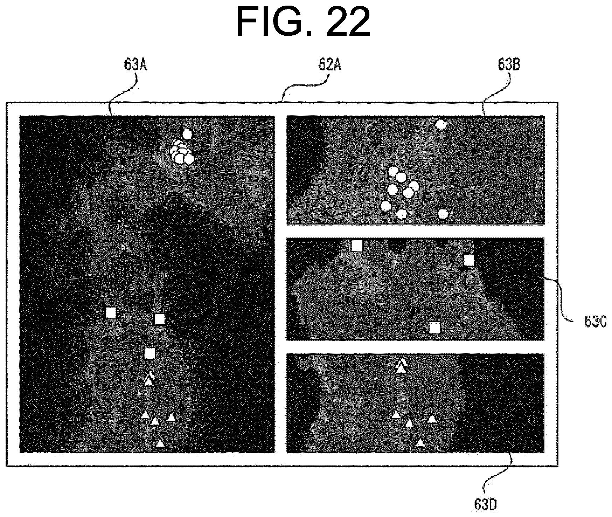

As another example, in step S05 of FIG. 3, the output section 513 of FIG. 2 may output the entire display region and the plurality of partial display regions as illustrated in FIG. 22. An example of FIG. 22 is obtained by adding the following changes to the example of FIG. 20. Specifically, the partial display region 63A as the entire display region is arranged in a left half of the display region 62A, and the remaining partial display regions 63B, 63C, and 63D are arranged side by side in the vertical direction in a right half of the display region 62A. As an example, the arrangement of each of the partial display regions 63B, 63C, and 63D may be determined based on values of a latitude and/or a longitude of the range to be displayed. Note that the arrangement of the partial display regions 63A, 63B, 63C, and 63D in FIG. 22 is merely an example, and this embodiment is not limited thereto.

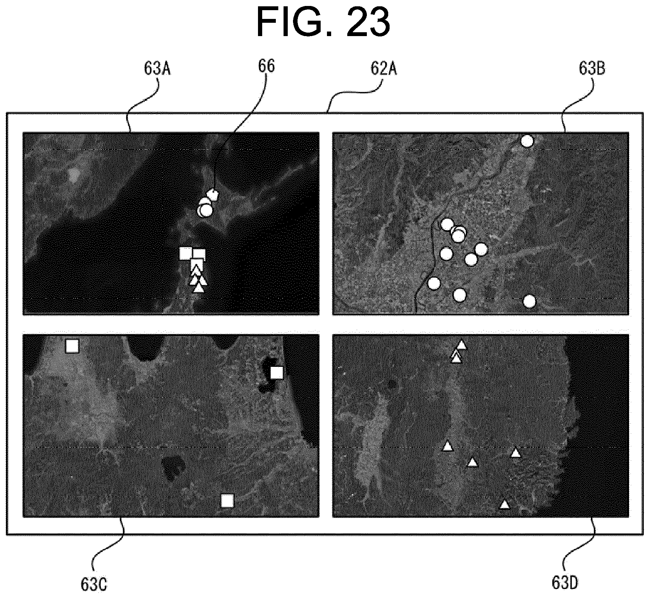

As another example, in step S05 of FIG. 3, the output section 513 of FIG. 2 may output the entire display region and the plurality of partial display regions as illustrated in FIG. 23. An example of FIG. 23 is obtained by adding the following changes to the example of FIG. 20. That is, in the partial display region 63A as the entire display region, the positions of the work devices 2 included in the first cluster are indicated by circle icons, the positions of the work devices 2 included in the second cluster are indicated by square icons, the positions of the work devices 2 included in the third cluster are indicated by equilateral triangle icons, and positions of work devices 2 included in a fourth cluster are indicated by equilateral pentagon icons 66. Of these clusters, the first cluster is displayed in the partial display region 63B, the second cluster is displayed in the partial display region 63C, the third cluster is displayed in the partial display region 63D, but there is no partial display region for displaying the fourth cluster. As described above, in the example of FIG. 23, the total number of clusters does not match the total number of partial display regions 63B, 63C, and 63D other than the entire display region. As described above, such display may be performed when the display region setter 516 of FIG. 18 does not perform matching between the total number of clusters and the total number of partial display regions 63B, 63C, and 63D other than the entire display region in step S22 of FIG. 19. As an example, a criterion for selecting clusters to be displayed in the respective partial display regions 63B, 63C, and 63D from among the plurality of clusters may be in descending order of the total number of work devices 2 included in the individual clusters.

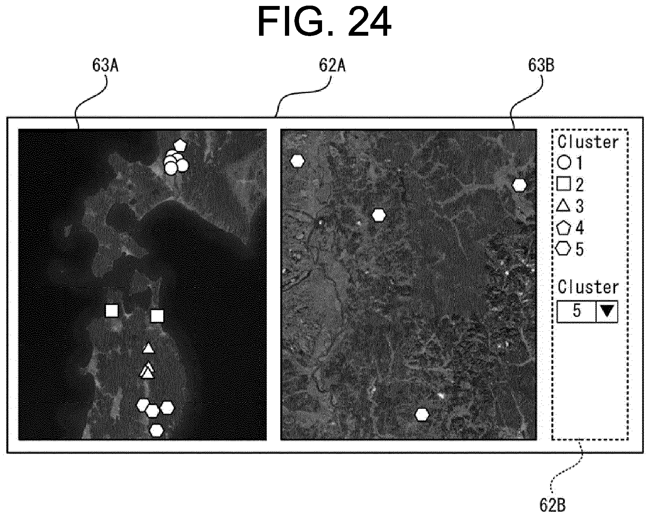

As another example, in step S05 of FIG. 3, the output section 513 of FIG. 2 may output the entire display region and a single partial display region as illustrated in FIG. 24. An example of FIG. 24 is obtained by adding the following changes to the example of FIG. 23. Specifically, a display region 62B is arranged in addition to the display region 62A, the partial display region 63A as the entire display region is arranged in a left half of the display region 62A, and the single partial display region 63B is arranged in a right half of the display region 62A. In the display region 62B, legends of icons indicating the positions of the work devices 2 included in the individual clusters and a menu screen to be operated by the user to perform switching between the clusters to be displayed in the partial display region 63B are displayed. An input operation performed by the user may be detected in step S06 of FIG. 3, and as a result, a process in step S02 to step S05 of FIG. 3 may be executed again to update the display information.

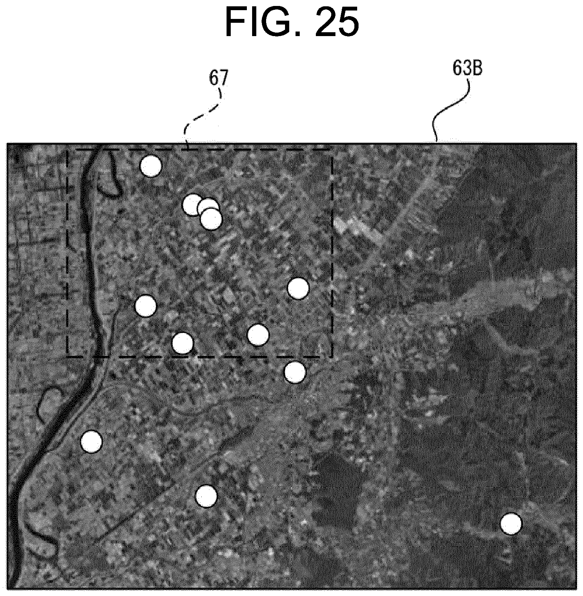

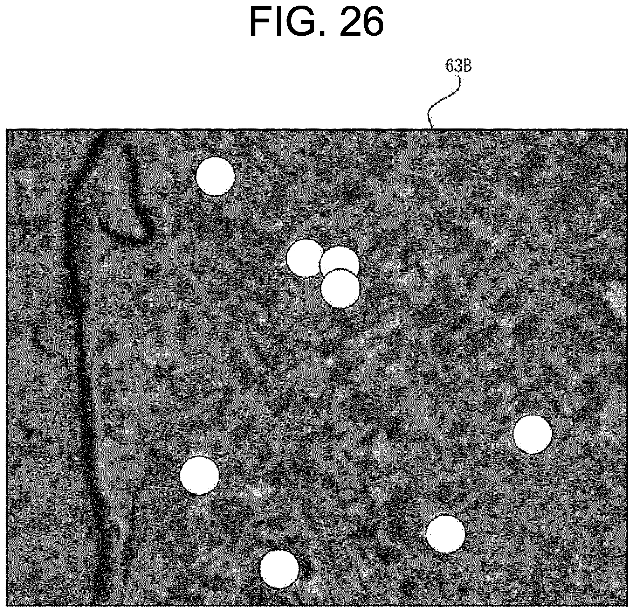

As another example, after the output section 513 of FIG. 2 outputs the partial display region in step S05 of FIG. 3, when an input operation performed by the user is detected in step S06 of FIG. 3 and the process in step S02 of FIG. 3 is executed again, the clustering process of the work devices 2 in step S21 of FIG. 19 may also be executed again. At this time, when the user performs an operation of changing a clustering condition in step S06 of FIG. 3, display information for outputting the partial display region may be changed in step S05 of FIG. 3 to be executed thereafter. For example, a range of a frame 67 in the partial display region 63B illustrated in FIG. 25 may be changed to the partial display region 63B illustrated in FIG. 26 by the user performing an operation of changing the clustering condition in step S06 of FIG. 3. In the examples of FIGS. 25 and 26, as a result of the change in the clustering condition, the total number of the work devices 2 whose position distribution is displayed is changed, and the range displayed in the partial display region 63B is also changed. As an example, the user may set a hierarchical clustering condition and then drill down the clustering condition to perform an operation of increasing or reducing the number of work devices 2 included in a cluster in a stepwise manner. Note that the user may register a clustering condition used in the past as a favorite in advance, and may read and set the registered clustering condition in step S06 of FIG. 3.

### Modification

In the above-described fifth embodiment, the configuration in which the clustering of the work devices 2 is used based on a distance between the work devices 2 has been described. As a modification of this configuration, clustering of work devices 2 may be performed based on an administrative division, such as a prefecture, a city, a town, or a village where the work devices 2 are located, an assigned range of a team, affiliation of an organization, a team, or the like in which the work devices 2 are registered, or the like.

### Modification

In the above-described fifth embodiment, the configuration in which the entire display region is displayed as the partial display region 63A has been described. As a modification of this configuration, the display of the entire display region may be omitted. In this case, each of partial display regions 63A, 63B, 63C, and 63D may display distribution of positions of work devices 2 included in a corresponding one of the clusters.

The specific description has been made so far based on the embodiments of the disclosure made by the inventor. However, it is needless to say that the present disclosure is not limited to the embodiments and various modifications may be made thereto without departing from the gist of the disclosure. Furthermore, the features described in the embodiment can freely be combined within the scope that is not technically contradictory.

### Appendices

The position information display methods, the position information display systems 1, and the position information display programs described in the individual embodiments may be described as follows.

A position information display method according to a first aspect, comprising:
acquiring position information indicating positions of a plurality of work devices;
generating range information indicating a first range in which the positions are distributed on a predetermined map;
calculating a scale for outputting display information including the first range, in map information representing the map, to a predetermined display region of a display device; and
outputting the display information indicating the distribution of the positions in the first range based on the position information, the range information, and the scale.

A position information display method according to a second aspect corresponding to the position information display method according to the first aspect, wherein
the generating of the range information includes
   extracting a condition range which satisfies a predetermined condition as the first range from a second range included in the map, and
the condition is set based on the positions of the plurality of work devices which individually move.

A position information display method according to a third aspect corresponding to the position information display method according to the second aspect, wherein
the calculating of the scale includes
calculating a scale such that the display information, including a third range which is arranged to surround the first range, which has a distance from any of end portions of the display region to the first range which is longer than a predetermined threshold value, and which has a peripheral shape having a similarity relationship with a shape of the display region, is output to the display region.

A position information display method according to a fourth aspect corresponding to the position information display method according to the second aspect or the third aspect, further comprising:
acquiring operation information indicating operation states of the plurality of work devices, wherein
the generating of the range information includes
   extracting, as the first range, a first condition range in which the positions of the work devices corresponding to the operation states which satisfy a predetermined first condition among the plurality of work devices are distributed on the map.

A position information display method according to a fifth aspect corresponding to the position information display method according to the fourth aspect, wherein the first condition is satisfied when the operation states of the work devices are in operation.

A position information display method according to a sixth aspect corresponding to the position information display method according to the second aspect or the third aspect, wherein
the generating of the range information includes
extracting, as the first range, a range in which work regions where the plurality of work devices have performed work from the second range.

A position information display method according to a seventh aspect corresponding to the position information display method according to the second aspect or the third aspect, wherein

the generating of the range information includes
extracting, as the first range, an input range represented by input range information which is externally input from the second range.

A position information display method according to an eighth aspect corresponding to the position information display method according to the second aspect or the third aspect, wherein
the generating of the range information includes
generating trajectory information indicating a trajectory of a movement of a predetermined one of the work devices based on the position information of the predetermined work device, and
extracting, as the first range, a range including the trajectory and a position of the predetermined work device from the second range.

A position information display method according to a ninth aspect corresponding to the position information display method according to the first aspect, wherein
the calculating includes
clustering the plurality of work devices into a plurality of clusters based on a predetermined clustering condition,
setting, in the display region, partial display regions to which the range information indicating ranges of distribution of the positions of the plurality of clustered work devices are output for the plurality of clusters, respectively, and
generating the range information of the plurality of clustered work devices for the plurality of clusters, respectively.

A position information display method according to a tenth aspect corresponding to the position information display method according to the ninth aspect, wherein
the outputting includes
outputting, for the plurality of clusters, respectively, the display information including the range to the partial display regions based on the position information, the range information, and the scale of the plurality of clustered work devices.

A position information display method according to an 11th aspect corresponding to the position information display method according to the ninth aspect, wherein
the clustering condition includes
clustering a first work device and a second work device among the plurality of work devices into a same cluster among the plurality of clusters when a distance between the first work device and the second work device is shorter than a predetermined threshold value, and
clustering the first work device and the second work device into different clusters among the plurality of clusters when the distance is equal to or longer than the predetermined threshold value.

A position information display system according to a 12th aspect, comprising:
an acquirer that acquires position information indicating positions of a plurality of work devices;
a calculator that generates range information indicating a first range in which the positions are distributed on a predetermined map and that calculates a scale for outputting display information including the first range, in map information representing the map, to a predetermined display region of a display device; and
an output section that outputs the display information indicating the distribution of the positions in the first range based on the position information, the range information, and the scale.

A position information display program according to a 13th aspect that is executed by a computing device to realize a predetermined process, the process comprising:
acquiring position information indicating positions of a plurality of work devices;
generating range information indicating a first range in which the positions are distributed on a predetermined map;
calculating a scale for outputting display information including the first range, in map information representing the map, to a predetermined display region of a display device; and
outputting the display information indicating the distribution of the positions in the first range based on the position information, the range information, and the scale.

### REFERENCE SIGNS LIST

1 position information display system
2 work device
21 icon
3 on-board terminal
4 network
5 position information display device
50 bus
51 computing device
511 acquirer
512 calculator
513 output section
514 input section
515 clustering section
516 display region setter
517 range information generator
52 storage device
520 recording medium
521 program storage
522 map information storage
53 communication device
54 Input/output device
6 external terminal
61 display device
62A, 62B display region
63 main range
63A, 63B, 63C, 63D partial display region
64 peripheral region
65B, 65C, 65D frame
66 icon
67 frame
9 field
A11, A12, A21, A22 corner
F1, F2 frame
I1, I2 image
M1, M2, M3, M4, M5 menu
P position
P0 home
P1C, P2C, P3C current position
P1S, P2S start position
PW work position
T1, T2, T3 movement trajectory
TW1 work trajectory
WR work region

## Claims

1. A position information display method, comprising:
acquiring position information indicating positions of a plurality of work devices;
generating range information indicating a first range in which the positions are distributed on a predetermined map;
calculating a scale for outputting display information including the first range, in map information representing the map, to a predetermined display region of a display device; and
outputting the display information indicating the distribution of the positions in the first range based on the position information, the range information, and the scale.

2. The position information display method according to claim 1, wherein
the generating of the range information includes
extracting a condition range which satisfies a predetermined condition as the first range from a second range included in the map, and
the condition is set based on the positions of the plurality of work devices which individually move.

3. The position information display method according to claim 2, wherein
the calculating of the scale includes
calculating the scale such that the display information, including a third range which is arranged to surround the first range, which has a distance from any of end portions of the display region to the first range which is longer than a predetermined threshold value, and which has a peripheral shape having a similarity relationship with a shape of the display region, is output to the display region.

4. The position information display method according to claim 2 or 3, further comprising:
acquiring operation information indicating operation states of the plurality of work devices, wherein
the generating of the range information includes
extracting, as the first range, a first condition range in which the positions of the work devices corresponding to the operation states which satisfy a predetermined first condition among the plurality of work devices are distributed on the map.

5. The position information display method according to claim 4, wherein the first condition is satisfied when the operation states of the work devices are in operation.

6. The position information display method according to claim 2 or 3, wherein
the generating of the range information includes
extracting, as the first range, a range in which work regions where the plurality of work devices have performed work from the second range.

7. The position information display method according to claim 2 or 3, wherein
the generating of the range information includes
extracting, as the first range, an input range represented by input range information which is externally input from the second range.

8. The position information display method according to claim 2 or 3, wherein
the generating of the range information includes
generating trajectory information indicating a trajectory of a movement of a predetermined one of the work devices based on the position information of the predetermined work device, and
extracting, as the first range, a range including the trajectory and a position of the predetermined work device from the second range.

9. The position information display method according to claim 1, wherein
the calculating includes
clustering the plurality of work devices into a plurality of clusters based on a predetermined clustering condition,
setting, in the display region, partial display regions to which the range information indicating ranges of distribution of the positions of the plurality of clustered work devices are output for the plurality of clusters, respectively, and
generating the range information of the plurality of clustered work devices for the plurality of clusters, respectively.

10. The position information display method according to claim 9, wherein
the outputting includes
outputting, for the plurality of clusters, respectively, the display information including the range to the partial display regions based on the position information, the range information, and the scale of the plurality of clustered work devices.

11. The position information display method according to claim 9, wherein
the clustering condition includes
clustering a first work device and a second work device among the plurality of work devices into a same cluster among the plurality of clusters when a distance between the first work device and the second work device is shorter than a predetermined threshold value, and
clustering the first work device and the second work device into different clusters among the plurality of clusters when the distance is equal to or longer than the predetermined threshold value.

12. A position information display system, comprising:
an acquirer that acquires position information indicating positions of a plurality of work devices;
a calculator that generates range information indicating a first range in which the positions are distributed on a predetermined map and that calculates a scale for outputting display information including the first range, in map information representing the map, to a predetermined display region of a display device; and
an output section that outputs the display information indicating the distribution of the positions in the first range based on the position information, the range information, and the scale.

13. A position information display program that is executed by a computing device to realize a predetermined process, the process comprising:
acquiring position information indicating positions of a plurality of work devices;
generating range information indicating a first range in which the positions are distributed on a predetermined map;
calculating a scale for outputting display information including the first range, in map information representing the map, to a predetermined display region of a display device; and
outputting the display information indicating the distribution of the positions in the first range based on the position information, the range information, and the scale.
